**Europäisches Patentamt**

**European Patent Office**

**Office européen des brevets**

(11) Numéro de publication: **0 094 288**
**A1**

# DEMANDE DE BREVET EUROPEEN

(21) Numéro de dépôt: 83400848.4

(51) Int. Cl.³: **C 01 B 33/28**

(22) Date de dépôt: 28.04.83

(30) Priorité: **11.05.82 FR 8208142**

(43) Date de publication de la demande: 16.11.83
**Bulletin 83/46**

(84) Etats contractants désignés: **BE DE FR GB IT NL SE**

(71) Demandeur: **RHONE-POULENC SPECIALITES CHIMIQUES, "Les Miroirs" 18, Avenue d'Alsace, F-92400 Courbevoie (FR)**

(72) Inventeur: **Latourrette, Bertrand, 21, Allée Clemencet, F-93340 - Le Raincy (FR)**
Inventeur: **Seigneurin, Laurent, Avenue du Parc, F-30340 - Salindres (FR)**

(74) Mandataire: **Savina, Jacques et al, RHONE-POULENC RECHERCHES Service Brevets Chimie et Polymères 25, Quai Paul Doumer, F-92408 Courbevoie Cedex (FR)**

(54) **Procédé de fabrication de zéolites.**

(57) La présente invention concerne un procédé de fabrication de zéolites à partir d'une source de silice, d'une source d'alumine, d'une source de cation M et d'eau.

Le procédé de fabrication est caractérisé en ce que la source de silice est constituée, au moins en partie par un composé fluosilicique.

Les zéolites obtenues selon le procédé de l'invention peuvent être de tous les types; elles peuvent être utilisées dans toutes les applications connues pour chacun de ces types.

EP 0 094 288 A1

ACTORUM AG

1

## PROCEDE DE FABRICATION DE ZEOLITES

La présente invention concerne un procédé de fabrication de zéolites cristallines synthétiques du type tamis moléculaire.

Les zéolites sont des aluminosilicates cristallins ayant une composition exprimée de façon générale par la formule :

$$\frac{M_2O}{n} : Al_2O_3 : x\ SiO_2 : y\ H_2O$$ dans laquelle M représente au moins un cation et n la valence de celui-ci.

Les zéolites cristallines synthétiques sont préparées à partir d'un mélange réactionnel comportant une source de silice, une source d'alumine et une source du cation M et de l'eau (Encyclopédie Kirk Othmer.). Les sources de silices employées sont le silicate de sodium, les gels de silice, la silice dissoute, les sols aqueux de silice colloïdale, la silice en poudre et la silice amorphe. Les sources d'alumine employées sont l'aluminate de sodium, le chlorure d'aluminium, les nitrates et sulfates d'aluminium, l'alumine active, l'alumine gamma, les trihydrates d'alumine. L'oxyde de cation $M_2O$ est ajouté au mélange réactionnel sous la forme d'un sel soluble dans l'eau ou d'hydroxyde, on utilise habituellement l'oxyde de sodium $Na_2O$ qui est ajouté sous forme d'hydroxyde de sodium, d'aluminate de sodium ou de silicate de sodium.

Suivant le mode opératoire utilisé et les conditions de mélange et d'évolution, il est possible d'obtenir à partir de ces matières premières tous les types de zéolites comme, par exemple, ceux décrits plus en détail dans de nombreux brevets et en particulier : la zéolite A (brevet américain n° 2 882 243), la zéolite X (brevet américain n° 2 882 244), la zéolite Y (brevet français n° 1 231 239), la zéolite L (brevet français n° 1 224 154), la zéolite D (brevet français 1 211 594), la zéolite T (brevet français n° 1 223 775) et la zéolite R (brevet français n° 1 201 827) les zéolites dites ZSM (brevet américain n° 3 702 886). Il est également possible d'obtenir à partir de ces matières premières des tamis moléculaires ayant les structures : faujasite, chabazite, gmelinite, analcite, mordenite, erionite, philipsite, gismondine et hydroxysodalite, etc...

2

La demanderesse a mis au point un nouveau procédé de fabrication de zéolites cristallines synthétiques mettant en oeuvre une nouvelle source de silice comme matière première : les composés fluosiliciques.

Ce procédé est particulièrement intéressant pour fabriquer des zéolites de rapport silice/alumine élevé. De plus, ce procédé présente un intérêt industriel considérable dans la mesure où il s'intègre parfaitement dans les usines de production d'engrais. En effet, il utilise une matière première abondante et de faible coût. Il ne nécessite, par ailleurs, qu'une consommation d'énergie négligeable par rapport aux procédés traditionnels qui utilisent du silicate et de l'aluminate de sodium.

Le procédé selon la présente invention concerne un procédé de fabrication de zéolites à partir d'un mélange réactionnel comportant une source de silice, une source d'alumine, une source de cation M et de l'eau caractérisé en ce que la source de silice est constituée, au moins en partie, par un composé fluosilicique.

Selon le procédé de l'invention on peut obtenir tous les types de zéolites décrits dans l'ouvrage de Donald W. Breck : Zeolite, Molecular Sieves 1974, by John Wiley and Sons, Inc.

Les composés fluosiliciques que l'on peut mettre en oeuvre selon le procédé de l'invention sont ceux qui comportent les groupements $SiF_6$. On met notamment en oeuvre les composés choisis parmi les fluosilicates minéraux tels que l'acide fluosilicique, les fluosilicates d'alcalins, d'alcalino-terreux, d'aluminium et les fluosilicates organiques tels que les fluosilicates d'ammonium, d'alkylammonium, d'hydrazine, de guanidine, de benzidine, de pyridine, d'aniline, de toluidine.

Selon le procédé de l'invention, on préfère plus particulièrement mettre en oeuvre l'acide fluosilicique, le fluosilicate de sodium ou le fluosilicate de potassium.

L'utilisation d'acide fluosilicique, de fluosilicate de sodium ou de potassium qui sont des produits peu onéreux et disponibles en grande quantité dans les usines de fabrication d'engrais phosphatés rend le procédé selon l'invention particulièrement attractif du point de vue industriel.

Par ailleurs, le procédé de l'invention permet de valoriser la silice contenue dans ces composés préférés. En effet, celle-ci est actuellement perdue, lorsque ces composés sont présents dans les phases de désilicatation lors de la fabrication des produits fluorés nécessaires à la fabrication de l'aluminium (fluorure d'aluminium, cryolite).

En outre, la mise en oeuvre d'acide fluosilicique permet une grande souplesse lors de l'introduction des matières premières selon le procédé de l'invention, du fait que de nombreux composés organiques et minéraux sont solubles dans celui-ci.

Selon une variante du procédé de l'invention, on peut remplacer partiellement le composé fluosilicique par une source de silice classique. C'est-à-dire que, au plus 70 % et en préférence au plus 50 % en poids de la silice comptée en $SiO_2$, peut provenir d'une autre source de silice que du composé fluosilicique.

La source d'alumine que l'on peut mettre en oeuvre selon le procédé de l'invention est celle habituellement employée dans les procédés classiques. On peut, par exemple, utiliser l'aluminate de sodium, le chlorure d'aluminium, les nitrates et sulfates d'aluminium, l'alumine active, l'alumine gamma, l'alumine amorphe, les gels d'alumine amorphes, les hydrates d'alumine et, en particulier, le trihydrate d'alumine provenant du procédé Bayer de fabrication de l'aluminium (hydrargillite) la boehmite et la pseudo-boehmite, l'alumine active obtenue par déshydratation rapide d'hydroxydes ou d'oxyhydroxydes d'aluminium dans un courant de gaz chaud, les argiles de type kaolin.

Le cation M peut être au moins un métal choisi parmi les alcalins, les alcalino-terreux, les cations tétraalkylammonium dans lesquels les groupes alkyls ont de 1 à 5 atomes de carbone. La source du cation M peut être introduite au moins partiellement avec la source de silice, par exemple lorsque celui-ci est le sodium sous forme de fluosilicate de sodium et/ou avec la source d'alumine par exemple lorsque celui-ci est le sodium sous forme d'aluminate de sodium, et/ou indépendamment de ces sources sous forme d'hydroxydes du cation M par exemple sous forme d'hydroxyde de sodium.

Selon une variante du procédé de l'invention, on peut également fabriquer selon celui-ci des zéolites contenant dans la structure d'autres cations que Si et Al comme : le fer, le chrome, le vanadium, l'arsenic, le cobalt, le gallium, le germanium. Ceux-ci pourront être introduits sous forme de solution ou de solide avec les matières premières.

Le procédé selon la présente invention permet de préparer tous les types de zéolites.

Les étapes mises en oeuvre pour préparer ces différents types comportent généralement les étapes suivantes :

- on mélange les réactifs en continu ou en discontinu sous agitation à une température déterminée et dans des proportions conduisant à la zéolite désirée,

- on opère éventuellement le mûrissement du mélange pendant un temps et à une température déterminée, éventuellement sous agitation,

- on effectue ensuite la cristallisation de la zéolite désirée par chauffage du mélange à une température supérieure à celle de mélange et supérieure à celle du mûrissement éventuel. Cette cristallisation est effectuée pendant un temps donné avec ou sans agitation en présence éventuellement d'amorces de la zéolite désirée,

- on effectue ensuite la filtration de la zéolite obtenue et on récupère, d'une part, la zéolite qui contient éventuellement une petite partie insoluble du fluorure du cation M et, d'autre part, des eaux-mères qui contiennent la partie soluble du fluorure du cation M et soit un aluminate du cation M soit un silicate du cation M,

- la zéolite récupérée est lavée de façon à enlever la partie insoluble du fluorure du cation M. La zéolite ainsi obtenue peut être soumise aux traitements classiques bien connus de l'homme de l'art : séchage, calcination, mise en forme avec éventuellement un liant, échange, etc...

Selon le procédé de l'invention, les eaux-mères peuvent être traitées selon l'une des méthodes décrites ci-après lorsque M = Na ou K. Dans le cas où les eaux-mères contiennent la partie soluble du fluorure du cation M et l'aluminate du cation M, on les traite

5

avec de la chaux et on récupère du fluorure de calcium, de la soude ou de la potasse. Après séparation, la soude ou la potasse obtenue peut être recyclée dans le procédé de l'invention, après éventuellement une opération de concentration. Le fluorure de calcium après lavage et séchage est obtenu très pur et peut être directement utilisé, par exemple comme matière première dans la fabrication d'acide fluorhydrique.

Dans le cas où les eaux-mères contiennent la partie soluble du fluorure du cation M et le silicate du cation M, il faut distinguer deux voies. La première voie concerne le cas où il y a un gros excès de silicate du cation M. Il convient alors d'effectuer la précipitation d'un silico-aluminate par ajout d'une source d'alumine ; après filtration du silico-aluminate, la liqueur-mère est traitée par la chaux, on récupère du fluorure de calcium et la soude ou la potasse qui peut être recyclée après éventuellement une opération de concentration.

La seconde voie concerne le cas où il y a un petit excès de silicate. Dans ce cas, on traite les eaux-mères à la chaux et l'on récupère du fluorure de calcium et une petite quantité de silicate de calcium.

Par ailleurs, le fluorure de sodium contenu dans les eaux-mères peut être utilisé tel quel ou servir à la fabrication de cryolite par réaction avec le fluorure d'aluminium.

Selon le procédé de l'invention, les eaux de lavage, lorsque M = Na ou K, peuvent, après éventuellement concentration, être traitées comme les eaux-mères. Le fluorure alcalin qu'elles contiennent peut être utilisé tel quel ou servir à la fabrication de cryolite dans le cas du fluorure de sodium.

Il apparaît ainsi que le procédé de fabrication de zéolite selon l'invention est particulièrement intéressant sur le plan industriel, non seulement du fait des matières premières qu'il met en oeuvre, mais également du fait qu'il conduit à des sous-produits très facilement valorisables ou recyclables.

Les zéolites obtenues selon le procédé de l'invention peuvent être utilisées dans les réactions catalytiques et, en particulier, dans les réactions de conversion des hydrocarbures. Ainsi qu'il est bien connu de l'homme de l'art pour ces applications les cations originels des zéolites peuvent être remplacés au moins en partie par échange d'ion par d'autres cations. Les cations préférés incluent les ions métalliques, les ions ammonium, les ions hydrogènes ou des mélanges de ceux-ci. Plus particulièrement, on peut utiliser les cations choisis parmi : l'hydrogène, les terres rares, l'aluminium, les métaux des groupes IIA, IIIB, IVB, VIB, VIII, IB, IIB, IIIA, IVA de la classification périodique des éléments et de préférence les cations des métaux tels que les terres rares, Mn, Ca, Mg, Zn, Cd, Pd, Ni, Co, Ti, Al, Sn, Fe et Co. Un exemple typique d'échange d'ion consiste à mettre en contact la zéolite synthétique avec une solution d'un sel du ou des cations que l'on désire introduire, le sel peut par exemple être un chlorure, un nitrate ou un sulfate. Après le contact avec la solution de sel, la zéolite est de préférence lavée, éventuellement mise en forme et séchée à une température comprise entre 60° et 300°C environ puis calcinée à une température comprise entre 260 et environ 800°C pendant 1 à 48 heures ou plus.

Par cet échange, le réseau cristallin de base des zéolites reste essentiellement inchangé ainsi que peut le montrer le diagramme de diffraction X.

Les zéolites ainsi préparées peuvent être utilisées pour le séchage, les séparations, les purifications, comme échangeur de cation ou comme catalyseur dans notamment une grande variété de réactions de conversion de composés organiques. De tels procédés incluent par exemple les procédés d'hydroalkylation, d'alkylation, aromatisation, d'isomérisation, de transalkylation, de dismutation, d'oligomérisation, de crakage, d'hydrocrakage.

Par ailleurs, ainsi qu'il est bien connu de l'homme de l'art les zéolites fabriquées selon le procédé de l'invention peuvent être associées avec une matrice minérale ou organique, cette dernière pouvant être inerte ou catalytiquement active.

La matrice peut être présente simplement comme agent de liaison pour maintenir les particules de zéolite ensemble ou peut être ajoutée comme diluant pour contrôler le taux de conversion dans un procédé catalytique.

La matrice peut ainsi être choisie parmi l'alumine, la silice, les kaolins, les bentonites, les montmorillonites, les sépiolites, l'attapulgite, les terres de remplissage, les matériaux poreux synthétiques comme $SiO_2 - Al_2O_3$, $SiO_2 - ZrO_2$, $SiO_2 - ThO_2$, $SiO_2 - MgO$, $SiO_2 - BeO$, $SiO_2 - TiO_2$ ou des combinaisons de ces produits.

A titre illustratif le procédé de préparation de divers types de zéolites va maintenant être décrit dans des formes de réalisation préférées.

Dans ce qui suit :

- $Al_2O_3$ : représente l'aluminium introduit dans le mélange et compté en $Al_2O_3$,

- $SiO_2$ : représente le silicium introduit dans le mélange essentiellement sous forme du composé fluosilicique et compté en $SiO_2$,

- $Na_2O$ : représente la soude disponible (NaOH) introduite dans le mélange et comptée en $Na_2O$. On entend par disponible, la soude qui reste après réaction avec les anions présents dans le mélange (fluorures, chlorures, sulfates, nitrates, etc...)

### Préparation de zéolite sodique de type A

On effectue le mélange d'eau, d'aluminate de sodium, d'acide fluosilicique et de soude de telle façon que le mélange présente une composition exprimée en rapport molaire d'oxydes telle que :

$\dfrac{SiO_2}{Al_2O_3}$ : soit compris entre environ 0,2 et environ 3 et de préférence entre 1,2 et 2

$\dfrac{H_2O}{Na_2O}$ : soit compris entre environ 6 et environ 200 et de préférence entre 15 et 100,

$\dfrac{Na_2O}{SiO_2}$ : soit compris entre environ 0,4 et environ 9 et de préférence entre 1 et 3.

Les réactifs peuvent être introduits simultanément ou dans un ordre quelconque sous agitation.

On opère habituellement la cristallisation de la zéolite A à une température comprise entre 20 et 100°C par évolution du mélange pendant 0,5 à 80 heures et de préférence 2 à 16 heures à une température comprise de préférence entre 80 et 90°C.

La présence d'amorces de zéolite A dans le mélange favorise la cristallisation et permet de diminuer le temps de celle-ci. La température ne doit généralement pas dépasser 100°C pour éviter la formation d'une phase du type hydroxysodalite.

La cristallisation est de préférence opérée sous agitation. Après filtration, le lavage est effectué de préférence à 80°C — 85°C.

On obtient une zéolite A très pure dont le rapport $\dfrac{SiO_2}{Al_2O_3}$ peut très aisément être supérieur ou égal à 2.

Le fluorure de sodium obtenu dans la liqueur mère peut, après précipitation avec la chaux, être transformé en fluorure de calcium et soude, cette dernière étant recyclée dans le procédé ainsi qu'il a été décrit ci-dessus.

Préparation de zéolite sodium de type faujasite (X et Y)

On opère le mélange d'eau, d'aluminate de sodium, d'acide fluosilicique et de soude, de telle façon que la composition molaire du mélange réactionnel se trouve comprise dans l'une des gammes suivantes :

|  | Gamme 1 | Gamme 2 |
|---|---|---|
| $Na_2O/SiO_2$ | 1,5 à 9 | 0,66 à 1,5 |
| $SiO_2/Al_2O_3$ | 2,3 à 50 | 2,3 à 50 |
| $H_2O/Na_2O$ | 10 à 400 | 10 à 400 |

On opère la cristallisation du mélange à une température comprise entre 20 et 125°C sans agitation (mélange type gamme 1).

Pour les mélanges type gamme 2, il est nécessaire d'effectuer un mûrissement du mélange à une température comprise entre 20 et 40°C pendant 12 heures et 3 jours de préférence sans agitation. Une agitation ou un temps de cristallisation trop long fait apparaître la zéolite NaP.

Les cristaux formés sont séparés de la liqueur mère par filtration ; après lavage et séchage, on obtient une zéolite sodique de type faujasite (X ou Y) parfaitement cristallisée et pratiquement pure (90 % de zéolite sodique X ou Y plus substances amorphes) dont le diagramme de diffraction X est essentiellement le même que celui indiqué dans la littérature. La proportion molaire silice/ alumine de cette zéolite est comprise entre 2 et 6.

Les eaux mères sont traitées de la même façon que décrit précédemment, afin de recycler la soude et de récupérer du fluorure de calcium.

## Préparation de zéolite de sodium type chabazite

On opère le mélange d'eau, d'aluminate de sodium, d'acide fluosilicique et de soude de telle façon que la composition molaire du mélange réactionnel soit telle que

$\dfrac{SiO_2}{Al_2O_3}$ soit compris entre environ 3 et environ 50

$\dfrac{H_2O}{Na_2O}$ soit compris entre environ 20 et environ 400

$\dfrac{Na_2O}{SiO_2}$ soit compris entre environ 0,2 et environ 1,5

On opère la cristallisation du mélange à une température comprise entre 50 et 120°C avec éventuellement agitation. Les cristaux formés sont séparés de la liqueur mère par filtration après lavage et séchage, on obtient une zéolite de sodium type chabazite parfaitement cristallisée et très pure. La proportion molaire silice/alumine de cette zéolite est comprise entre 3 et 4,5.

Les eaux-mères sont traitées de la même façon que décrit précédemment afin de recycler la soude et de récupérer le fluorure de calcium.

## Préparation de zéolite de sodium type mordénite

On opère le mélange d'eau, d'aluminate de sodium, d'acide fluosilicique et de soude de telle façon que le mélange réactionnel présente une composition exprimée en rapport molaire d'oxydes telle que

0094288

10

$\dfrac{SiO2}{Al_2O_3}$  soit compris entre environ 7 et environ 100

$\dfrac{H2O}{Na_2O}$  soit compris entre environ 50 et environ 1200

$\dfrac{Na2O}{SiO_2}$  soit compris entre environ 0,05 et environ 1,5

On opère la cristallisation du mélange à une température comprise entre 80 et 350°C sous pression autogène et de préférence entre 100 et 180°C sous éventuellement agitation. Les cristaux formés sont séparés de la liqueur-mère par filtration après lavage et séchage, on obtient une zéolite de sodium type mordénite parfaitement cristallisée et très pure. La proportion molaire silice/alumine de cette zéolite est comprise entre 8 et 30.

Les eaux-mères sont traitées ainsi qu'il a été décrit ci-dessus.

Préparation de zéolite ZSM-5

Il est connu de préparer les zéolites ZSM-5 par cristallisation à partir d'un mélange réactionnel aqueux chauffé sous pression autogène, contenant à la fois des oxydes métalliques désirés et des sources d'ions tétrapropylammonium ou des alkylène-diamines en $C_5-C_7$ et supérieurs. Toutefois, ces composés organiques sont très onéreux et le prix de la zéolite ZSM-5, dont les emplois se développent très rapidement industriellement, restent jusqu'à présent très élevés comparativement aux autres zéolites.

Le procédé selon la présente invention permet de préparer des zéolites ZSM-5 à partir de matières premières peu coûteuses.

En effet, le procédé selon la présente invention permet d'une façon totalement surprenante, de fabriquer des zéolites de type ZSM sans utiliser des bases organiques azotées. Il est toutefois à noter que ces bases sont utilisables dans le cadre du procédé de l'invention.

Selon l'invention, on opère le mélange d'une solution d'acide fluosilicique avec une solution d'aluminate de sodium, de soude et d'eau.

11

Le mélange de ces solutions est effectué en mélangeant préalablement la soude et l'aluminate de sodium, puis ensuite en continu ou en discontinu sous agitation on mélange la solution obtenue avec celle d'acide fluosilicique.

Le mélange des réactifs est effectué de telle façon que les rapports molaires exprimés en oxydes du mélange réactionnel, soient tels que :

$SiO_2/Al_2O_3$ soit compris entre 10 et 200 et de préférence entre 30 et 120.

$H_2O/Na_2O$ soit compris entre 10 et 1500 et de préférence entre 20 et 750.

$Na_2O/SiO_2$ soit compris entre 0,05 et 0,25 et de préférence entre 0,07 et 0,2.

Après le mélange le précipité obtenu auquel on peut éventuellement ajouter des amorces de ZSM-5 obtenues au préalable, est cristallisé à l'autoclave sous pression autogène à une température comprise entre environ 80°C et environ 250°C et de préférence entre 150°C et 200°C pendant une durée comprise généralement entre 5 heures et 1 mois et de préférence pendant environ 48 heures.

Après cristallisation, le produit obtenu est filtré puis lavé et séché. Les eaux mères sont traitées ainsi qu'il a été décrit ci-dessus.

La présente invention va maintenant être illustrée par les exemples ci-après donnés à titre non limitatif.

EXEMPLE 1

L'exemple ci-après illustre sous forme d'un tableau certains types de zéolites que l'on peut obtenir selon le procédé de l'invention en indiquant :

- le type de la zéolite,

- la composition du mélange initial exprimée par les rapports molaires exprimés en oxydes de $\dfrac{M_2O}{SiO_2}$, $\dfrac{SiO_2}{Al_2O_3}$, $\dfrac{H_2O}{M_2O}$

- les réactifs utilisés,

- les conditions (température T°C et temps T) de cristallisation et éventuellement de mûrissement.

| Type de la zéolite | Mélange initial | | | Réactifs utilisés | Cristallisation | | Remarques |
|---|---|---|---|---|---|---|---|
| | $\dfrac{SiO_2}{Al_2O_3}$ | $\dfrac{Na_2O}{SiO_2}$ | $\dfrac{H_2O}{Na_2O}$ | | T° C | Temps | |
| 4 A | 0,92 | 6 | 108 | $H_2SiF_6$ + (aluminate de sodium + NaOH) | 90 | 20 h | |
| 4 A | 1 | 6 | 108 | $H_2SiF_6$ + (aluminate de sodium + NaOH) | 90 | 20 h | agitation |
| 4 A | 1,48 | 6 | 108 | $H_2SiF_6$ + (aluminate de sodium + NaOH) | 90 | 20 h | |
| 4 A | 2 | 6 | 52 | $H_2SiF_6$ + (aluminate de sodium + NaOH) | 85 | 18h | agitation |
| 4 A | 1,7 | 5 | 63 | $H_2SiF_6$ + (aluminate de sodium + NaOH) | 85 | 18h | |
| 4 A | 1,7 | 1,5 | 85 | $H_2SiF_6$ + (aluminate de sodium + NaOH) | 87 | 4h | 10% d'amorces de 4 A |
| 4 A | 1,7 | 1,5 | 67 | $H_2SiF_6$ + (aluminate de sodium + NaOH) | 85 | 18h | agitation |
| 4 A | 3 | 1,5 | 87 | $H_2SiF_6$ + (aluminate de sodium + NaOH) | 87 | 24h | |
| 4 A | 2,7 | 1,1 | 46 | $H_2SiF_6$ + (aluminate de sodium + NaOH) | 100 | 8h | |
| 4 A | 1,7 | 1 | 212 | $H_2SiF_6$ + (aluminate de sodium + NaOH) | 85 | 20h | agitation |
| 4 A | 0,43 | 3,3 | 40 | $H_2SiF_6$ + (aluminate de sodium + NaOH) | 85 | 8h | agitation |

| Type de la zéolite | Mélange initial | | | Réactifs utilisés | Cristallisation | | Remarques |
| | $\frac{SiO_2}{Al_2O_3}$ | $\frac{Na_2O}{SiO_2}$ | $\frac{H_2O}{Na_2O}$ | | T° C | Temps | |
|---|---|---|---|---|---|---|---|
| 4 A | 1,1 | 6 | 43 | $H_2SiF_6$ + (aluminate de sodium + NaOH) | 87 | 18 h | agitation |
| 4 A | 3 | 9 | 36 | ($H_2SiF_6$ + $Al_2O_3$) + NaOH | 100 | 10 h | agitation |
| 4 A | 1,7 | 1 | 200 | $H_2SiF_6$ + aluminate de sodium | 85 | 20 h | agitation |
| 4 A | 1,7 | 1,5 | 130 | ($H_2SiF_6$ + gel d'alumine)+aluminate de sodium | 85 | 18h | agitation |
| 4 A | 1,7 | 1,5 | 85 | ($H_2SiF_6$ + gel d'alumine) + NaOH | 90 | 4h | |
| 4 A | 1,7 | 1,5 | 85 | $H_2SiF_6$ + $Al(OH)_3$ + NaOH | 87 | 15h | |
| Remarques    Traitement des eaux-mères à la chaux + recyclage de la soude : après 5 opérations successives soude issue en majeure partie du recyclage après traitement à la chaux. | | | | | | | |
| 4 A | 1,7 | 1,5 | 85 | $H_2SiF_6$ + ($Al(OH)_3$ + NaOH) | 87 | 8h | agitation |
| 4 A | 1,5 | 9 | 73 | $Na_2SiF_6$ + (aluminate de sodium + NaOH) | 89 | 22h | agitation |

| Type de la zéolite | Mélange initial | | | Réactifs utilisés | Cristallisation | | Remarques |
|---|---|---|---|---|---|---|---|
| | $\dfrac{SiO_2}{Ga_2O_3}$ | $\dfrac{Na_2O}{SiO_2}$ | $\dfrac{H_2O}{Na_2O}$ | | T° C | Temps | |
| Hydroxysodalite | 1,7 | 2 | 90 | $H_2SiF_6 + Ga_2O_3 + NaOH$ | 85 | 36 h | agitation |
| Hydroxysodalite | 1,7 | 2 | 90 | $H_2SiF_6 + Ga_2O_3 + NaOH$ | 70 | 36 h | agitation |
| Type P | 1,7 | 2 | 90 | $H_2SiF_6 + Ga_2O_3 + NaOH$ | 60 | 36 h | agitation |
| ZSM 5 | 90 | 0,1 | 390 | $H_2SiF_6 + Ga_2O_3 + NaOH$ | 150 | 5 jours | |

| Type de la zéolite | Mélange initial | | | Réactifs utilisés | Cristallisation | | Remarques |
|---|---|---|---|---|---|---|---|
| | $\dfrac{SiO_2}{Al_2O_3}$ | $\dfrac{K_2O}{SiO_2}$ | $\dfrac{H_2O}{K_2O}$ | | T° C | Temps | |
| Type H | 1,7 | 4 | 40 | $H_2SiF_6 + (Al(OH)_3 + KOH)$ | 85 | 4 jours | |
| Type F | 1,7 | 6 | 27 | $H_2SiF_6 + (Al(OH)_3 + KOH)$ | 85 | 4 jours | |
| Chabazite | 1,5 | 6,4 | 55 | $H_2SiF_6 + (Al(OH)_3 + KOH)$ | 90 | 4 jours | |

| Type de la zéolite | Mélange initial | | | Réactifs utilisés | Cristallisation | | Remarques |
|---|---|---|---|---|---|---|---|
| | $\dfrac{SiO_2}{Al_2O_3}$ | $\dfrac{Na_2O}{SiO_2}$ | $\dfrac{H_2O}{Na_2O}$ | | T° C | Temps | |
| Mordenite | 7,5 | 0,2 | 400 | $H_2SiF_6$ + (aluminate de sodium + NaOH) | 150 | 8jours | |
| Mordenite | 30 | 0,08 | 600 | $H_2SiF_6$ + (aluminate de sodium + NaOH) | 150 | 8jours | |
| Mordenite | 40 | 0,16 | 520 | $H_2SiF_6$ + (aluminate de sodium + NaOH) | 150 | 2jours | |
| Mordenite | 50 | 0,08 | 900 | $H_2SiF_6$ + (aluminate de sodium + NaOH) | 150 | 5jours | |
| Mordenite | 15,5 | 0,13 | 200 | $H_2SiF_6$ + (aluminate de sodium + NaOH) | 250 | 8h | |
| Mordenite | 15,5 | 0,10 | 200 | $H_2SiF_6$ + (aluminate de sodium + NaOH) | 300 | 4h | |
| Mordenite | 39 | 0,28 | 150 | $H_2SiF_6$ + (aluminate de sodium + NaOH) | 150 | 2jours | |
| ZSM 5 | 50 | 0,05 | 720 | $H_2SiF_6$ + (aluminate de sodium + NaOH) | 150 | 5jours | |
| ZSM 5 | 90 | 0,1 | 390 | $H_2SiF_6$ + (aluminate de sodium + NaOH) | 150 | 5jours | |
| ZSM 5 | 30 | 0,08 | 600 | $H_2SiF_6$ + (aluminate de sodium + NaOH) | 150 | 5jours | amorces de ZSM 5 |
| ZSM 5 | 17 | 0,12 | 500 | $H_2SiF_6$ + (aluminate de sodium + NaOH) | 150 | 10jours | |

| Type de la zéolite | Mélange initial | | | Réactifs utilisés | Cristallisation | | Remarques |
|---|---|---|---|---|---|---|---|
| | $\dfrac{SiO_2}{Al_2O_3}$ | $\dfrac{Na_2O}{SiO_2}$ | $\dfrac{H_2O}{Na_2O}$ | | T° C | Temps | |
| ZSM 5 | 50 | 0,1 | 350 | $H_2SiF_6$ + (aluminate de sodium + NaOH) | 150 | 5 jours | |
| ZSM 5 | 94 | 0,085 | 475 | $H_2SiF_6$ + (aluminate de sodium + NaOH) | 100 | 3 semaines | |
| ZSM 5 | 50 | 0,20 | 180 | $H_2SiF_6$ + (aluminate de sodium + NaOH) | 150 | 3 jours | |
| ZSM 5 | 50 | 0,07 | 1000 | $H_2SiF_6$ + (aluminate de sodium + NaOH) | 150 | 5 jours | |
| ZSM 5 | 50 | 0,1 | 350 | $Na_2SiF_6$ + (aluminate de sodium + NaOH) | 150 | 5 jours | |
| Chabazite | 20 | 0,95 | 90 | $H_2SiF_6$ + (aluminate de sodium + NaOH) | 100 | 24h | |
| Chabazite | 24 | 0,95 | 90 | $H_2SiF_6$ + (aluminate de sodium + NaOH) | 100 | 48h | |
| Chabazite | 28 | 0,39 | 125 | $H_2SiF_6$ + (aluminate de sodium + NaOH) | 100 | 48h | |
| Chabazite | 10 | 0,9 | 170 | $H_2SiF_6$ + (aluminate de sodium + NaOH) | 100 | 48h | |
| Chabazite | 4,5 | 1 | 100 | $H_2SiF_6$ + (aluminate de sodium + NaOH) | 80 | 65h | |
| Chabazite | 6 | 1,5 | 87 | $H_2SiF_6$ + (aluminate de sodium + NaOH) | 80 | 60h | |

| Type de la zéolite | Mélange initial | | | Réactifs utilisés | Cristallisation | | | Remarques |
|---|---|---|---|---|---|---|---|---|
| | $\dfrac{SiO_2}{Al_2O_3}$ | $\dfrac{Na_2O}{SiO_2}$ | $\dfrac{H_2O}{Na_2O}$ | | T° C | Temps | | |
| Chabazite | 5,9 | 0,5 | 260 | $H_2SiF_6$ + (aluminate de sodium + NaOH) | 85 | 60 h | | |
| Chabazite | 4,5 | 0,4 | 325 | $H_2SiF_6$ + (aluminate de sodium + NaOH) | 80 | 65 h | | |
| Chabazite | 4 | 2,5 | 52 | $H_2SiF_6$ + (aluminate de sodium + NaOH) | 87 | 24 h | | |

| Type de la zéolite | Mélange initial | | | Réactifs utilisés | Cristallisation | | Mûrissement | |
|---|---|---|---|---|---|---|---|---|
| | $\dfrac{SiO_2}{Al_2O_3}$ | $\dfrac{Na_2O}{SiO_2}$ | $\dfrac{H_2O}{Na_2O}$ | | T°C | Temps | T°C | Temps |
| Faujasite | 4 | 1,5 | 87 | $H_2SiF_6$ + (aluminate de sodium + NaOH) | 85 | 4 jours | | |
| Faujasite | 4 | 6 | 42 | $H_2SiF_6$ + (aluminate de sodium + NaOH) | 85 | 2 jours | | |
| Faujasite | 4,5 | 3 | 85 | $H_2SiF_6$ + (aluminate de sodium + NaOH) | 80 | 2 jours | | |
| Faujasite | 4 | 2 | 80 | $H_2SiF_6$ + (aluminate de sodium + NaOH) | 80 | 2 jours | | |
| Faujasite | 4,5 | 5 | 52 | $H_2SiF_6$ + (aluminate de sodium + NaOH) | 80 | 2 jours | | |
| Faujasite | 4,5 | 4 | 65 | $H_2SiF_6$ + (aluminate de sodium + NaOH) | 80 | 2 jours | | |
| Faujasite | 16 | 1,4 | 74 | $H_2SiF_6$ + (aluminate de sodium + NaOH) | 100 | 12 h | 20°C | 24h |
| Faujasite | 10 | 0,9 | 180 | $H_2SiF_6$ + (aluminate de sodium + NaOH) | 100 | 15 h | 20°C | 24h |
| Faujasite | 2,7 | 1,1 | 46 | $H_2SiF_6$ + (aluminate de sodium + NaOH) | 100 | 12 h | 20°C | 24h |
| Faujasite | 20 | 1 | 90 | $H_2SiF_6$ + (aluminate de sodium + NaOH) | 100 | 12 h | 20°C | 24h |

18

EXEMPLE 2

L'exemple ci-après illustre le traitement des eaux-mères obtenues selon le procédé de l'invention.

On prépare une zéolite de type A en mélangeant préalablement 10 moles de NaOH et 1,174 d'hydrate d'alumine Al(OH)$_3$, la solution obtenue est diluée à 2 litres, on ajoute à ce mélange 1 mole de H$_2$SiF$_6$, le volume total étant de 2,51. Le mélange réactionnel présente la composition suivante :

$$\frac{SiO2}{Al_2O_3} = 1,70 \qquad \frac{Na2O}{SiO_2} = 2 \qquad \frac{H2O}{Na_2O} = 70$$

On opère la cristallisation de la zéolite 4 A par chauffage sans agitation du mélange à 86°C pendant 20 heures. On filtre, on lave à chaud la zéolite obtenue. Les eaux-mères et les eaux de lavage obtenues ont un volume de 10,81, on concentre par ébullition de façon à obtenir un volume de 61. Les eaux-mères ont une teneur en soude libre NaOH de 3,3 moles et en NaF de 5,87 moles.

On ajoute à ces eaux-mères 3 moles de Ca(OH)$_2$ à 100°C sans agitation, on porte 3 heures à l'ébullition, le volume est de 3 litres, on filtre à chaud et on lave. La composition du filtrat est la suivante :

| | | |
|---|---|---|
| Fluor | : | 0,27 mole |
| Alumine | : | 0,16 mole |
| Silice | : | 0,03 mole |
| NaOH | : | 8,68 moles |

ce qui correspond à une récupération de 92 % de NaOH.

Par ailleurs, 247g de solide séché à 100°C sont récupérés, la composition de ce solide est la suivante :

| | | |
|---|---|---|
| Perte au Feu à 500°C | : | 2,7 % |
| SiO$_2$ | : | 1,2 % |
| CaCO$_3$ | : | 2,9 % |
| CaF$_2$ | : | 91 % |

ce qui correspond à une récupération de fluor dans le CaF$_2$ de 95%.

Cet exemple illustre l'intérêt particulier du procédé de l'invention qui permet, d'une part, de recycler la soude pour la préparation de l'aluminate de soute et, d'autre part, de valoriser les ions fluor sous une forme commerciale de CaF$_2$ d'une haute qualité.

REVENDICATIONS

1) Procédé de fabrication de zéolite à partir d'un mélange réactionnel comportant les réactifs suivants : une source de silice, une source d'alumine, une source de cation M et de l'eau, caractérisé en ce que la source de silice est constituée, au moins en partie, par un composé fluosilicique.

2) Procédé selon la revendication 1 caractérisé en ce que le composé fluosilicique est choisi parmi : l'acide fluosilicique, les fluosilicates d'alcalin, les fluosilicates d'alcalino-terreux, le fluosilicate d'aluminium, le fluosilicate d'ammonium, les fluosilicates d'alkyl-ammonium, les fluosilicates d'hydrazine, de guanidine, de benzidine, de pyridine, d'aniline ou de toluidine.

3) Procédé selon l'une quelconque des revendications 1 ou 2 caractérisé en ce que au plus 70 % et de préférence au plus 50 % en poids de la silice comptée en $SiO_2$ provient d'une autre source de silice que du composé fluosilicique.

4) Procédé selon la revendication 1 dans lequel on mélange les réactifs puis on opère éventuellement le mûrissement du mélange, puis la cristallisation de la zéolite désirée et enfin la filtration de la zéolite et la récupération des eaux-mères, caractérisé en ce que les eaux-mères obtenues lorsque le cation M est soit le sodium soit le potassium sont traitées selon l'une des méthodes suivantes :

a - lorsque les eaux-mères contiennent la partie soluble du fluorure du cation M et l'aluminate du cation M on les traite avec de la chaux et on récupère le fluorure de calcium, de la soude ou de la potasse et de l'aluminate de calcium ; après séparation, la soude ou la potasse obtenue est recyclée/dans le procédé après éventuellement une opération de concentration.

b - lorsque les eaux-mères contiennent la partie soluble du fluorure du cation M et le silicate du cation M,

- s'il existe un gros excès de silicate du cation M, on effectue la précipitation d'un silico-aluminate par ajout d'une source d'alumine après filtration du silico-aluminate, la liqueur-mère obtenue est traitée par la chaux et on récupère du fluorure de calcium et de la soude ou de la potasse qui peut être recyclée après éventuellement une opération de concentration,

– s'il existe un petit excès de silicate, les eaux-mères sont traitées à la chaux et l'on récupère du fluorure de calcium et une petite quantité de silicate de calcium.

5) Procédé de fabrication de zéolite sodique de type A selon la revendication 1 caractérisé en ce que l'on effectue le mélange d'eau, d'aluminate de sodium, d'acide fluosilicique et de soude ; le mélange obtenu présente la composition exprimée en rapport molaire d'oxydes suivante :

$\dfrac{SiO_2}{Al_2O_3}$ : compris entre 0,2 et 3 et de préférence entre 1,2 et 2

$\dfrac{H_2O}{Na_2O}$ : compris entre 6 et 200 et de préférence entre 15 et 100

$\dfrac{Na_2O}{SiO_2}$ : compris entre 0,4 et 9 et de préférence entre 1 et 3.

les réactifs sont introduits sous agitation ; on opère la cristallisation de la zéolite A à une température comprise entre 20 et 100°C et de préférence entre 80 et 90°C par évolution du mélange pendant 0,5 à 80 heures et de préférence 2 à 16 heures sous agitation ; on filtre et on lave la zéolite A obtenue avec de l'eau à une température comprise entre 80 et 85°C.

6) Procédé de fabrication de zéolite sodique de type faujasite selon la revendication 1, caractérisé en ce que l'on opère le mélange d'eau, d'aluminate de sodium, d'acide fluosilicique et de soude, la composition exprimée en rapport molaire d'oxydes du mélange réactionnel est comprise dans l'une des gammes suivantes :

|  | Gamme 1 | Gamme 2 |
|---|---|---|
| $Na_2O/SiO_2$ | 1,5 à 9 | 0,66 à 1,5 |
| $SiO_2/Al_2O_3$ | 2,3 à 50 | 2,3 à 50 |
| $H_2O/Na_2O$ | 10 à 400 | 10 à 400 |

- pour le mélange de la gamme 1, on opère la cristallisation de la zéolite à une température comprise entre 20 et 125°C sans agitation ; pour les mélanges type gamme 2, on effectue un mûrissement du mélange à une température comprise entre 20 et 40°C pendant 12 heures et 3 jours de préférence sans agitation ; les cristaux formés sont séparés de la liqueur-mère par filtration ; après lavage et séchage, on récupère une zéolite sodique de type faujasite.

7) Procédé de fabrication de zéolide de sodium de type chabazite selon la revendication 1, caractérisé en ce que l'on opère le mélange d'eau, d'aluminate de sodium, d'acide fluosilicique et de soude ; la composition molaire du mélange réactionnel est la suivante :

$\dfrac{SiO_2}{Al_2O_3}$ : compris entre 3 et 50

$\dfrac{H_2O}{Na_2O}$ : compris entre 20 et 400

$\dfrac{Na_2O}{SiO_2}$ : compris entre 0,2 et 1,5 ;

on opère la cristallisation du mélange à une température comprise entre 50 et 120°C avec éventuellement agitation ; les cristaux formés sont séparés de la liqueur-mère par filtration après lavage et séchage, on récupère une zéolite de sodium type chabazite.

8) Procédé de fabrication de zéolite de sodium de type mordénite selon la revendication 1, caractérisé en ce que l'on opère le mélange d'eau, d'aluminate de sodium, d'acide fluosilicique et de soude, le mélange réactionnel présente la composition exprimée en rapport molaire d'oxydes suivante :

$\dfrac{SiO_2}{Al_2O_3}$ : compris entre 7 et 100

$\dfrac{H_2O}{Na_2O}$ : compris entre 50 et 1200

$\dfrac{Na_2O}{SiO_2}$ : compris entre 0,05 et 1,5 ;

on opère la cristallisation du mélange à une température comprise entre 80 et 350°C sous pression autogène et de préférence entre 100 et 180°C sous éventuellement agitation ; les cristaux formés sont séparés de la liqueur-mère par filtration après lavage et séchage, on recueille une zéolite de sodium type mordénite.

9) Procédé de fabrication de zéolite de type ZSM-5 selon la revendication 1, caractérisé en ce que l'on opère le mélange d'une solution d'acide fluosilicique avec une solution d'aluminate de sodium, de soude et d'eau ; le mélange de ces solutions est effectué en mélangeant préalablement la soude et l'aluminate de sodium, puis ensuite en continu ou en discontinu sous agitation on mélange la solution obtenue avec celle d'acide fluosilicique ; les rapports molaires exprimés en oxydes de la composition du mélange réactionnel sont les suivants :

$SiO_2/Al_2O_3$ compris entre 10 et 200 et de préférence entre 30 et 120,

$H_2O/Na_2O$ compris entre 10 et 1500 et de préférence entre 20 et 750,

$Na_2O/SiO_2$ compris entre 0,05 et 0,25 et de préférence entre 0,07 et 0,2 ;

après le mélange le précipité obtenu auquel on peut éventuellement ajouter des amorces de ZSM-5 obtenues au préalable, est cristallisé à l'autoclave sous pression autogène à une température comprise entre 80°C et 250°C et de préférence entre 150°C et 200°C pendant une durée comprise généralement entre 5 heures et 1 mois et de préférence pendant environ 48 heures ;

après cristallisation le produit obtenu est filtré puis lavé et séché ; on recueille une zéolite de type ZSM-5.

0094288

Office européen
des brevets

**RAPPORT DE RECHERCHE EUROPEENNE**

Numéro de la demande

EP 83 40 0848

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 839 539 (C.H. ELLIOTT, JR.) | | C 01 B 33/28 |
| | --- | | |
| A | DE-A-2 722 535 (GIULINI CHEMIE GmbH) <br> * Exemples 1,2 * | | |
| | --- | | |
| A | FR-A-2 398 698 (PRODUITS CHIMIQUES UGINE KUHLMANN) <br> * Revendication 7; page 5, lignes 15-21; exemple 2 * | | |
| | --- | | |
| A | DE-A-2 746 844 (GIULINI CHEMIE GmbH) <br> * Exemple 2 * | | |
| | --- | | |

| | | DOMAINES TECHNIQUES RECHERCHES (Int. Cl. ³) |
|---|---|---|
| A | DE-A-2 828 458 (HOECHST AG) | C 01 B 33 |
| | ----- | |

Le présent rapport de recherche a été établi pour toutes les revendications

| Lieu de la recherche <br> LA HAYE | Date d'achèvement de la recherche <br> 25-07-1983 | Examinateur <br> BREBION J.CH. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82